# FASCICULE DE BREVET EUROPEEN

(11) **EP 1 228 919 B1**
(45) Date de publication et mention de la délivrance du brevet: **27.04.2011**
(21) Numéro de dépôt: 02290036.9
(22) Date de dépôt: 08.01.2002
(51) Int. Cl.: B60L 11/18, B60L 11/16

(54) **Système d'alimentation d'un véhicule à traction électrique**
Stromversorgungssystem für ein elektrisch angetriebenes Fahrzeug
Power supply system for an electric driven vehicle

(30) Priorité: 24.01.2001 FR 0100951
(43) Date de publication de la demande: 07.08.2002
(73) Titulaire: ALSTOM Transport SA, 92300 Levallois-Perret (FR)
(72) Inventeur: Batisse, Jean-Pierre, 78170 La Selle Saint Cloud (FR)
(74) Mandataire: Habasque, Etienne J. Jean-François

(56) Documents cités:
- EP-A- 0 982 176
- DE-A- 3 101 655
- WHEELER P W ET AL: "A BI-DIRECTIONAL RECTIFIER FOR USE WITH A VOLTAGE FED INVERTER IN A HIGH PERFORMACE VARIABLE SPEED AC MOTOR DRIVE SYSTEM" EPE '95: 6TH. EUROPEAN CONFERENCE ON POWER ELECTRONICS AND APPLICATIONS. SEVILLA, SEPT. 19 - 21, 1995, EUROPEAN CONFERENCE ON POWER ELECTRONICS AND APPLICATIONS, BRUSSELS, EPE ASSOCIATION, B, vol. & 1 CONF. 6, 19 septembre 1995 (1995-09-19), pages 1095-1100, XP000537502

## Description

L'invention se rapporte à un système d'alimentation en énergie électrique de véhicules de transport en commun à traction électrique et se rapporte notamment à l'alimentation en énergie électrique de tramways.

Il est connu de la demande de brevet FR-A1-2 782 680 déposée par la demanderesse, un système d'alimentation de véhicules à traction électrique permettant de faire circuler des véhicules de transport en commun, tels que des tramways de grande capacité, sans faire appel à une alimentation continue par caténaire. Un tel système comporte alors un dispositif d'alimentation autonome embarqué à bord du véhicule, constitué d'un moteur électrique pourvu d'un volant d'inertie de forte masse, et des stations d'arrêts munies d'un secteur d'alimentation permettant la recharge en énergie du volant d'inertie.

Un tel volant d'inertie embarqué à bord du véhicule ferroviaire présente toutefois l'inconvénient de nécessiter un dispositif encombrant de suspension pour amortir le fort couple gyroscopique risquant de perturber le comportement dynamique du véhicule et des moyens de protection limitant les risques mécaniques ou thermique en cas de défaillance. De plus, dans une telle installation, le secteur d'alimentation des stations d'arrêt est fortement sollicité lors du rechargement du volant d'inertie durant le temps d'arrêt, ce qui oblige à avoir de puissantes et coûteuses infrastructures d'alimentation électrique aux stations d'arrêt pour éviter des surcharges du réseau d'alimentation.

L'invention vise donc à remédier à ces inconvénients en proposant un système d'alimentation en énergie électrique d'un véhicule à traction électrique qui permette la recharge rapide du dispositif d'alimentation autonome embarqué à bord du véhicule tout en conservant des infrastructures d'alimentation électrique au niveau des stations d'arrêt de puissance modeste et qui soit simple et économique à réaliser.

L'invention a pour objet un système d'alimentation d'un véhicule à traction électrique équipé de moteurs électriques de traction comportant un dispositif d'alimentation autonome rechargeable embarqué à bord du véhicule pour alimenter les moteurs électriques de traction, au moins une station d'arrêt munie d'un dispositif d'alimentation électrique raccordé à un réseau électrique, et des moyens de connexion assurant le raccordement électrique, à l'approche de la station d'arrêt, du dispositif d'alimentation autonome du véhicule avec le dispositif d'alimentation de la station d'arrêt afin d'assurer la recharge du dispositif d'alimentation autonome lorsque le véhicule est arrêté dans la station, caractérisé en ce que le dispositif d'alimentation autonome à bord du véhicule comprend une batterie de supercondensateurs et en ce que le dispositif d'alimentation de la station d'arrêt comporte un système à accumulation cinétique d'énergie.

Selon des modes particuliers de réalisation, le système d'alimentation peut comprendre l'une ou plusieurs des caractéristiques suivantes prises isolément ou selon toutes les combinaisons techniquement possibles :
- le système à accumulation cinétique d'énergie récupère l'énergie de freinage du véhicule lorsque le véhicule se présente à l'approche de la station d'arrêt ;
- le système à accumulation cinétique d'énergie fournit de l'énergie au dispositif d'alimentation autonome du véhicule lorsque le véhicule est en phase d'accélération au départ de la station d'arrêt ;
- les moyens de connexions sont constitués d'une caténaire disposée dans chaque station d'arrêt et coopérant avec un pantographe porté par le véhicule, le retour de courant étant réalisé par les roues et les rails.

On comprendra mieux les buts, aspects et avantages de la présente invention, d'après la description donnée ci-après d'un mode de réalisation de l'invention, présenté à titre d'exemple non limitatif, en se référant aux dessins annexés, dans lesquels :
- la figure 1 est une vue schématique en perspective d'une station d'arrêt et d'un tramway équipé d'un système d'alimentation selon l'invention ;
- la figure 2 est un schéma électrique du circuit de puissance du système d'alimentation de la figure 1.

Pour faciliter la lecture des dessins, seuls les éléments nécessaires à la compréhension de l'invention ont été représentés.

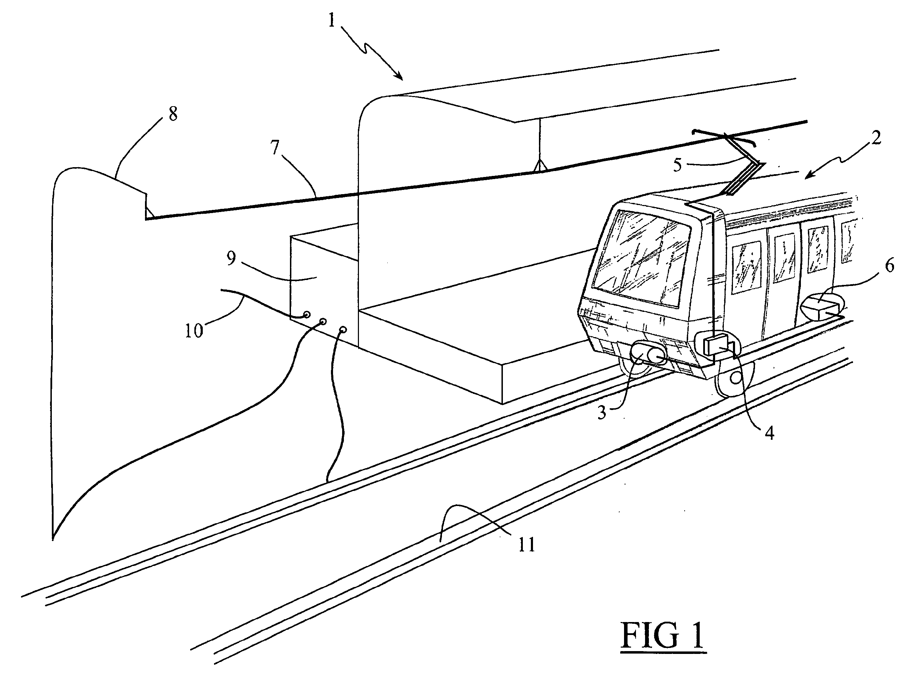

La figure 1 représente une voie ferrée équipée d'une station d'arrêt 1 dans laquelle un véhicule ferroviaire 2, de type tramway, est arrêté. Le tramway 2 est équipé de moteurs de traction électriques 3 qui sont raccordés à un circuit électronique de puissance 4 réalisé à base de transistors IGBT 13 et alimenté d'une part en régime conventionnel par un pantographe 5 à partir d'une caténaire 7, avec retour de courant par un rail 11 de la voie, et d'autre part en régime autonome par un dispositif d'alimentation autonome 6 embarqué à bord du tramway 2.

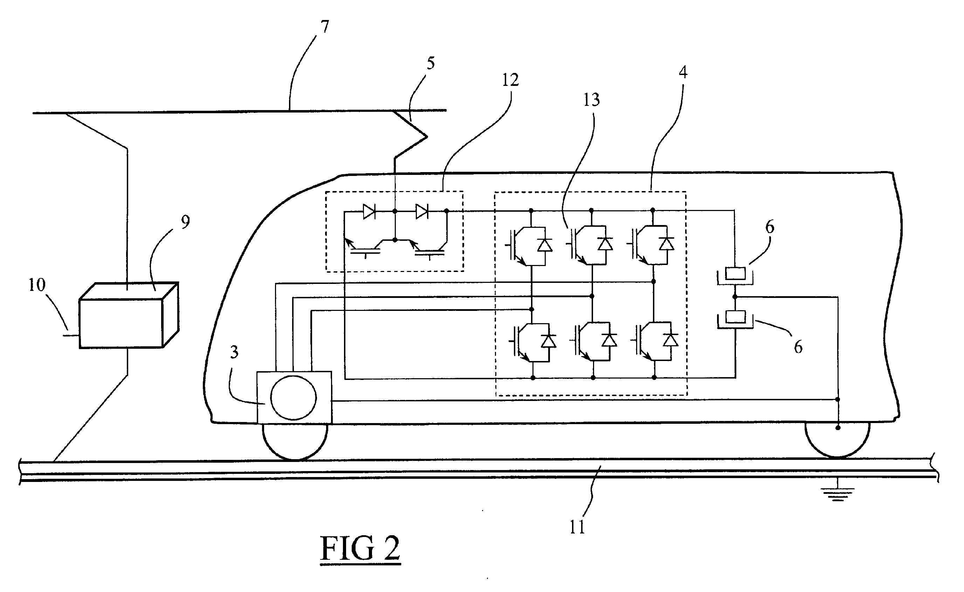

Conformément à la figure 2, au pantographe 5 est associé un dispositif électronique redresseur 12 qui permet de réguler un courant moyen unipolaire si la caténaire 7 est alimentée en tension alternative, par exemple par hachage ou commande de la conduction, et qui est conducteur en cas d'alimentation de la caténaire 7 en tension continue classique. Les moteurs de traction 3 sont des moteurs réversibles, c'est à dire qu'ils absorbent de l'énergie électrique pendant les moments de traction et fournissent de l'énergie électrique pendant les moments de freinage.

Le dispositif d'alimentation autonome est constitué principalement d'une batterie de supercondensateurs 6, également appelés condensateurs à couche double, répartis dans la structure du tramway 2 et capables d'absorber ou de restituer une grande quantité d'énergie électrique avec un bon rendement et une grande rapidité. De tels supercondensateurs sont par exemples décrits dans la demande de brevet WO 96/11 486. La tension du dispositif d'alimentation autonome 6 est fixée soit à une valeur de l'ordre de 750 V, soit de 1500 V si le véhicule est aussi destiné à circuler sur des portions de voies ferrées conventionnelles.

Conformément à la figure 1, la station d'arrêt 1 comporte un auvent qui porte le câble de la caténaire 7 au dessus de la voie, la caténaire 7 étant destiné à coopérer avec le pantographe 5 du tramway 2 pour assurer la recharge du dispositif d'alimentation autonome 6 pendant l'arrêt du tramway 2 dans la station 1. De manière préférentielle, la caténaire 7 s'étend de part et d'autre de la station d'arrêt 1 sur quelques dizaines de mètres, de manière à permettre la connexion du pantographe 5 avec la caténaire 7 durant la phase d'accélération et de décélération du tramway 2 aux abords de la station d'arrêt 1. L'extrémité de la caténaire 7 est soutenu, en entrée et en sortie de la station d'arrêt 1, par un pylône 8 supportant le câble de la caténaire 7 à une hauteur légèrement supérieure à la hauteur du câble de la caténaire 7 dans la station d'arrêt 1, de manière à former une pente progressive de contact et de délestage du pantographe 5 respectivement lors de l'arrivée et du départ du tramway 2 de la station d'arrêt 1.

La caténaire 7 est alimentée par un système d'accumulation cinétique d'énergie 9 comportant un dispositif électromécanique de type volant d'inertie, constitué par exemple d'un moteur générateur asynchrone ou d'un moteur synchrone à aimants permanents dont le rotor entraîne un volant d'inertie tournant sous vide sur des roulements à faible frottement comme des paliers magnétiques ou plus économiquement des roulements de céramique. Dans une variante de réalisation le volant d'inertie peut encore être entraîné par l'association d'un moteur asynchrone avec un moteur synchrone, le moteur asynchrone jouant alors un rôle moteur en étant alimenté par du courant triphasé et le moteur synchrone fournissant alors un courant monophasé alimentant la caténaire 7. La tension de sortie du système à accumulation cinétique d'énergie 9 est fixée à une valeur voisine de celle du dispositif d'alimentation autonome 6 afin de permettre un fonctionnement identique du circuit de puissance 4 des moteurs de traction 3 que celui-ci soit alimenté directement par la batterie de condensateur 6 disposé à bord du tramway 2, ou au travers du pantographe 5 et de la caténaire 7, par le système à accumulation cinétique d'énergie 9 d'une station d'arrêt 1.

Ce système d'accumulation cinétique d'énergie 9 est connecté à un réseau électrique 10 de distribution assurant l'entraînement progressif du rotor du moteur, à consommation de puissance réduite, lorsque aucun tramway 2 ne se trouve aux abords de la station 1.

Le fonctionnement du système d'alimentation du tramway va maintenant être décrit.

Lorsque le tramway 2 est situé entre deux stations d'arrêts 1, dans une zone non équipée de caténaire 7, le pantographe 5 est soit descendu, soit libre en complète extension, et les moteurs de tractions 3 sont alimentés, au travers du circuit de puissance 4, par le dispositif d'alimentation autonome, et en particulier par la batterie de supercondensateurs 6, provoquant ainsi la décharge progressive de ces derniers.

Pendant cette phase de fonctionnement en autonomie du tramway 2, le système d'accumulation cinétique d'énergie 9 de chaque station d'arrêt 1 est connecté au réseau électrique 10 de manière à charger progressivement en énergie le volant d'inertie tout en consommant une puissance réduite.

Lorsque le tramway 2 s'approche d'une station d'arrêt 1, le pantographe 5 est placé, le cas échéant par commande du conducteur, à une hauteur d'attente correspondant à une hauteur légèrement inférieure à la hauteur du câble de la caténaire 7 au niveau du premier pylône 8 de la station d'arrêt 1.

Aux abords de la station d'arrêt 1, le pantographe 5 en position d'attente vient toucher le câble de la caténaire 7 de la station d'arrêt 1 peu de temps après être passé à hauteur du premier pylône 8, cet instant correspondant sensiblement au début de la phase de freinage du tramway 2. Durant cette phase de freinage, les moteurs de traction 3 fournissent de l'énergie qui est soit transférée rapidement, par l'intermédiaire du pantographe 5 et de la caténaire 7, au système d'accumulation cinétique d'énergie 9 de la station d'arrêt 1 entraînant ainsi l'augmentation de la vitesse de rotation du volant d'inertie par le moteur servant précédemment de générateur, sans transfert d'énergie vers le réseau électrique 10, soit de manière plus classique conservée à bord du véhicule et transférée à la batterie de supercondensateurs 6, une combinaison de ces deux solution étant également possible.

Lorsque le tramway 2 est arrêté en station 1 pour permettre la descente et la montée de passagers, un transfert d'énergie se produit inversement entre le système à accumulation cinétique d'énergie 9 et le tramway 2, de l'énergie étant envoyée vers le dispositif d'alimentation autonome du tramway 2 de manière à recharger ou compléter la charge de la batterie de supercondensateurs 6. Grâce au système à accumulation cinétique d'énergie 9, une grande quantité d'énergie peut être transférée rapidement vers la batterie de supercondensateurs 6 sans entraîner de surcharge du réseau électrique 10, l'énergie transférée étant prélevée à l'énergie cinétique du volant d'inertie.

Le tramway 2 démarre ensuite de la station 1 et durant cette phase les moteurs de traction 3 sont alimentés par la caténaire 7 et reçoivent principalement l'énergie du système à accumulation cinétique d'énergie 9 ainsi que, dans une moindre mesure, l'énergie fournie par le réseau électrique 10 de la station d'arrêt 1. Durant cette même phase de démarrage, l'énergie disponible à la caténaire 7 est également utilisée pour maintenir la charge de la batterie de supercondensateurs 6.

Lorsque le tramway 2 accélère et que le pantographe 5 parvient à l'extrémité de la caténaire 7, correspondant avantageusement à l'obtention d'une vitesse palier du tramway 2, le circuit de puissance 4 détecte l'interruption de la fourniture d'énergie par la caténaire 7 et commande alors la fourniture d'énergie aux moteurs de traction 3 par le dispositif d'alimentation autonome 6 jusqu'à ce que le tramway 2 atteigne la prochaine station 1.

Durant cette phase de fonctionnement autonome du tramway, le système à accumulation cinétique d'énergie 9 de la station d'arrêt 1 précédemment sollicitée est de nouveau chargé à puissance réduite, à partir du réseau électrique 10, jusqu'à l'arrivée d'un prochain tramway 2.

Un tel système d'alimentation présente l'avantage de permettre la recharge rapide du dispositif d'alimentation autonome du tramway avec un réseau d'alimentation électrique de faible puissance au niveau des stations d'arrêt.

De plus, le maintien de l'alimentation par caténaire durant la phase, fortement consommatrice en énergie, d'accélération du tramway depuis une station d'arrêt présente l'avantage d'augmenter sensiblement l'autonomie du tramway en alimentation autonome, ou permet de réduire l'encombrement et le coût de la batterie de supercondensateurs, l'énergie consommée durant cette phase étant alors principalement utilisée pour maintenir le tramway à une vitesse en palier.

L'utilisation d'un dispositif d'alimentation autonome à bord du véhicule à base de supercondensateurs aptes à être répartis dans la structure du véhicule permet également d'optimiser le comportement du véhicule et présente l'avantage d'offrir une grande robustesse et une grande tolérance aux vibrations et mouvements habituellement présents à bord des véhicules ferroviaires.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation la batterie de supercondensateurs peut être associée avec des batteries de type conventionnelles, afin d'accroître la capacité de stockage du dispositif d'alimentation autonome ou constituer un système d'autonomie de secours.

Ainsi, dans une autre variante de réalisation non représentée, les moyens de connexion assurant le raccordement électrique, aux abords de chaque station d'arrêt, du dispositif d'alimentation autonome avec le dispositif d'alimentation de la station d'arrêt pourront être constitués par un système de type rail/patin.

Ainsi, dans une autre variante de réalisation le véhicule pourra être routier et rouler sur des pneumatiques à condition d'être guidé aux abords de la station et de disposer d'une paire de dispositif de captage de l'énergie électrique, tels que des rails latéraux servant aussi de guidage, ou d'un dispositif d'alimentation pratiquement sans contact comme un système à induction mutuelle fonctionnant par exemple à la fréquence générée par le système à accumulation cinétique d'énergie en station.

## Revendications

1. Système d'alimentation d'un véhicule (2) à traction électrique équipé de moteurs électriques de traction (3) comportant un dispositif d'alimentation autonome (6) rechargeable embarqué à bord du véhicule (2) pour alimenter les moteurs électriques de traction (3), au moins une station d'arrêt (1) munie d'un dispositif d'alimentation électrique raccordé à un réseau électrique (10), et des moyens de connexion (5, 7) assurant le raccordement électrique, à l'approche de la station d'arrêt (1), du dispositif d'alimentation autonome (6) du véhicule avec le dispositif d'alimentation de la station d'arrêt (1) afin d'assurer la recharge du dispositif d'alimentation autonome lorsque le véhicule est arrêté dans la station (1), **caractérisé en ce que** ledit dispositif d'alimentation autonome à bord du véhicule comprend une batterie de supercondensateurs (6) et **en ce que** ledit dispositif d'alimentation de la station d'arrêt comporte un système à accumulation cinétique d'énergie (9).

2. Système d'alimentation d'un véhicule (2) à traction électrique selon la revendication 1, **caractérisé en ce que** ledit système à accumulation cinétique d'énergie (9) récupère l'énergie de freinage du véhicule (2) lorsque le véhicule (2) se présente à l'approche de la station d'arrêt (1).

3. Système d'alimentation d'un véhicule (2) à traction électrique selon l'une quelconque des revendications 1 à 2, **caractérisé en ce que** ledit système à accumulation cinétique d'énergie (9) fournit de l'énergie au dispositif d'alimentation autonome (6) du véhicule (2) lorsque le véhicule est en phase d'accélération au départ de la station d'arrêt (1).

4. Système d'alimentation d'un véhicule à traction électrique selon l'une quelconque des revendications 1 à 3, **caractérisé en ce que** les moyens de connexions sont constitués d'une caténaire (7) disposée dans chaque station d'arrêt (1) et coopérant avec un pantographe (5) porté par le véhicule (2).

5. Système d'alimentation d'un véhicule à traction électrique selon l'une quelconque des revendications 1 à 3, **caractérisé en ce que** les moyens de connexion sont constitués par un système de type rail-patin.

6. Système selon l'une quelconque des revendications 1 à 5, **caractérisé en ce que**, durant la phase de fonctionnement en autonomie du véhicule, le système d'accumulation cinétique d'énergie (9) est connecté au réseau électrique, jusqu'à l'arrivée d'un autre véhicule.

7. Système selon la revendication 6, **caractérisé en ce que**, lorsque le système d'accumulation cinétique d'énergie est connecté au réseau électrique, il est chargé à puissance réduite.

8. Système selon l'une quelconque des revendications 1 à 7, **caractérisé en ce que** ledit système à accumulation cinétique d'énergie (9) transfère de l'énergie vers le dispositif d'alimentation autonome du véhicule lorsque le véhicule est arrêté à la station d'arrêt.

9. Système selon l'une quelconque des revendications 1 à 8, **caractérisé en ce que** le dispositif d'alimentation autonome comporte, en outre, des batteries du type conventionnel associées aux batteries de supercondensateurs.

## Claims

1. A power supply system for an electrically propelled vehicle (2) equipped with electric traction motors (3), including an autonomous power supply device (6) which can be recharged on board the vehicle (2) for supplying power to the electric traction motors (3), at least one station (1) provided with an electrical power supply device connected to a mains electrical power supply network (10) and connecting means (5, 7) providing the electrical connection, on approaching the station (1), to the autonomous power supply device (6) of the vehicle with the power supply device of the station (1) in order to provide recharging of the autonomous power supply device when the vehicle is stopped in the station (1), **characterised in that** said autonomous power supply device on board the vehicle comprises a battery of supercapacitors (6) and **in that** said power supply device of the station comprises an energy accumulating kinetic system (9).

2. The power supply system for an electrically propelled vehicle (2) according to Claim 1, **characterised in that** said energy accumulating kinetic system (9) recovers the braking energy of the vehicle (2) when the vehicle (2) is approaching the station (1).

3. The power supply system for an electrically propelled vehicle (2) according to either of Claims 1 to 2, **characterised in that** said energy accumulating kinetic system (9) supplies energy to the autonomous power supply device of the vehicle (2) when the vehicle is in the accelerating phase as it leaves the station (1).

4. The power supply system for an electrically propelled vehicle according to any of Claims 1 to 3, **characterised in that** the connecting means consist of an overhead line (7) provided in each station (1) and cooperating with a pantograph (5) carried by the vehicle (2).

5. The power supply system for an electrically propelled vehicle according to any of Claims 1 to 3, **characterised in that** the connecting means consist of a flange rail type system.

6. A system according to any of Claims 1 to 5, **characterised in that** during the autonomous operating phase of the vehicle, the energy accumulating kinetic system (9) is connected to the mains electrical power supply network until another vehicle arrives.

7. The system according to Claim 6, **characterised in that** when the energy accumulating kinetic system is connected to the mains electrical power supply network, it is charged with reduced power.

8. The system according to any of Claims 1 to 7, **characterised in that** said energy accumulating kinetic system (9) transfers energy to the autonomous power supply device of the vehicle when the vehicle is stopped in the station.

9. The system according to any of Claims 1 to 8, **characterised in that** the autonomous power supply device further comprises batteries of the conventional type associated with supercapacitor batteries.

## Patentansprüche

1. Versorgungssystem für ein Fahrzeug (2) mit elektrischem Antrieb, das mit Antriebs-Elektromotoren (3) ausgestattet ist, aufweisend eine wiederaufladbare autonome Versorgungsvorrichtung (6), die zum Versorgen der Antriebs-Elektromotoren (3) an Bord des Fahrzeugs (2) eingebettet ist, mindestens eine Haltestation (1), die mit einer Stromversorgungsvorrichtung ausgestattet ist, die an ein Stromnetz (10) angeschlossen ist, und Anschlussmittel (5, 7), die beim Annähern an die Haltestation (1) das elektrische Anschließen der autonomen Versorgungsvorrichtung (6) des Fahrzeugs an die Versorgungsvorrichtung der Haltestation (1) sicherstellen, um das Wiederaufladen der autonomen Versorgungsvorrichtung zu gewährleisten, wenn das Fahrzeug in der Station (1) angehalten wird, **dadurch gekennzeichnet, dass** die autonome Versorgungsvorrichtung an Bord des Fahrzeugs eine Batterie von Superkondensatoren (6) aufweist und dass die Versorgungsvorrichtung der Haltestation ein kinetische-Energie-Akkumulationssystem (9) aufweist.

2. Versorgungssystem für ein Fahrzeug (2) mit elektrischem Antrieb gemäß Anspruch 1, **dadurch gekennzeichnet, dass** das kinetische-Energie-Akkumulationssystem (9), wenn das Fahrzeug (2) sich der Haltestation (1) nähert, die Bremsenergie des Fahrzeugs (2) zurückgewinnt.

3. Versorgungssystem für ein Fahrzeug (2) mit elektrischem Antrieb gemäß einem der Ansprüche 1 bis 2, **dadurch gekennzeichnet, dass** das kinetische-Energie-Akkumulationssystem (9) der autonomen Versorgungsvorrichtung (6) des Fahrzeugs (2) Energie zuführt, wenn sich das Fahrzeug beim Wegfahren von der Haltestation (1) in der Beschleunigungsphase befindet.

4. Versorgungssystem für ein Fahrzeug mit elektrischem Antrieb gemäß einem der Ansprüche 1 bis 3, **dadurch gekennzeichnet, dass** die Anschlussmittel aus einer Oberleitung (7) gebildet sind, die in jeder Haltestation (1) angeordnet ist und mit einem Stromabnehmer (5) zusammenwirkt, der von dem Fahrzeug (2) getragen wird.

5. Versorgungssystem für ein Fahrzeug (2) mit elektrischem Antrieb gemäß einem der Ansprüche 1 bis 3, **dadurch gekennzeichnet, dass** die Anschlussmittel aus einem System des Schiene-Stromabnehmerschuh-Typs gebildet sind.

6. System gemäß einem der Ansprüche 1 bis 5, **dadurch gekennzeichnet, dass** während der Autonomie-Funktionsphase des Fahrzeugs das kinetische-Energie-Akkumulationssystem (9) bis zur Ankunft eines anderen Fahrzeugs an das Stromnetz angeschlossen ist.

7. System gemäß Anspruch 6, **dadurch gekennzeichnet, dass**, wenn das kinetische-Energie-Akkumulationssystem an das Stromnetz angeschlossen ist, es mit verringerter Leistung geladen wird.

8. System gemäß einem der Ansprüche 1 bis 7, **dadurch gekennzeichnet, dass** das kinetische-Energie-Akkumulationssystem (9) Energie an die autonome Versorgungsvorrichtung des Fahrzeugs überträgt, wenn das Fahrzeug an der Haltestation angehalten wird.

9. System gemäß einem der Ansprüche 1 bis 8, **dadurch gekennzeichnet, dass** die autonome Versorgungsvorrichtung ferner Batterien des herkömmlichen Typs aufweist, die mit den Batterien von Superkondensatoren verbunden sind.
